# EUROPÄISCHE PATENTSCHRIFT

(11) **EP 3 509 929 B1**
(45) Veröffentlichungstag und Bekanntmachung des Hinweises auf die Patenterteilung: **03.06.2020**
(21) Anmeldenummer: 17807692.3
(22) Anmeldetag: 07.09.2017
(51) Int. Cl.: B62D 1/12, B62D 5/00

(54) **STELLTEIL UND STEUERUNG FÜR EIN KRAFTFAHRZEUG**
CONTROL PART AND COMMAND FOR A MOTRO VEHICLE
PIÈCE DE RÉGLAGE ET COMMANDE POUR VÉHICULE À MOTEUR

(30) Priorität: 07.09.2016 DE 102016010849
(43) Veröffentlichungstag der Anmeldung: 17.07.2019
(73) Patentinhaber: FKA GmbH, 52074 Aachen (DE)
(72) Erfinder: ECKSTEIN, Lutz, 52066 Aachen (DE); SANDMANN, Tobias, 52074 Aachen (DE); DANKERT, Jens, 52072 Aachen (DE)
(74) Vertreter: btb IP Bungartz Baltzer Partnerschaft mbB Patentanwälte
(86) Internationale Anmeldenummer: PCT/DE2017/100751
(87) Internationale Veröffentlichungsnummer: WO 2018/046064

(56) Entgegenhaltungen:
- EP-A1- 1 504 981
- EP-A1- 1 834 859
- US-A1- 2002 063 015
- US-A1- 2004 003 954
- US-A1- 2004 256 171

## Beschreibung

Die Erfindung betrifft ein Stellteil für ein Kraftfahrzeug mit mindestens zwei lenkbaren Rädern, bei welchem die Betätigungskraft in Fahrzeugquerrichtung durch eine Stellteilquerkraftsensorik redundant gemessen und der Stellteilwinkel mindestens durch einen elektromotorischen Stellteilaktuator beeinflusst wird, dessen Drehzahl und Drehmoment durch ein Stellteilgetriebe gewandelt werden, sowie eine Steuerung für ein Kraftfahrzeug, bei welcher die auf zwei erfindungsgemäße Stellteile in Fahrzeugquerrichtung ausgeübten Betätigungskräfte gemittelt und zur Beeinflussung des Radius der Bahnkurve des Kraftfahrzeugs genutzt werden, während die auf die Stellteile in Fahrzeuglängsrichtung ausgeübten Betätigungskräfte zur Berechnung einer angestrebten Schwimmwinkeländerung des Kraftfahrzeugs dienen. Insbesondere sind unter den lenkbaren Rädern Vorderräder, aber auch Hinterräder gemeint.

Gattungsgemäße Stellteile für Kraftfahrzeuge sind aus dem Stand der Technik bereits gut bekannt. Beispielsweise beschreibt DE19548713C1 eine Lenkwinkelstelleinrichtung für ein Kraftfahrzeug mit einem Bedienelement zur Lenkwinkeleinstellung in Abhängigkeit von einer zugehörigen Bedienelement-Betätigungsgröße, bei welchem der Kraftschlussbeiwert bei der Berechnung der Lenkwinkeleinstellung berücksichtigt wird. DE19625497C1 beschreibt eine Bedienelementanordnung zur Steuerung der Längs- und der Querbewegung eines Kraftfahrzeuges mit einem handbetätigbaren, in Fahrzeuglängsrichtung feststehend angeordneten Stellelement, das sowohl zur Steuerung der Fahrzeuglängsbewegung, als auch zur Beeinflussung der Fahrzeugquerbewegung genutzt wird. Die US 2002/0063015 A1 beschreibt zudem eine Fahrzeugsteuervorrichtung, die eine Reaktionskraft erzeugt, die einem von einem Fahrer betätigten Steuerhebel in Abhängigkeit von der Auslenkung des Steuerhebels entgegenwirkt und die Fahrsteuerung (u.a. Lenken, Beschleunigen, Bremen) eines Fahrzeugs durchführt. Ferner sind Fahrwerkregelsysteme bekannt, die im fahrdynamischen Grenzbereich den Schwimmwinkel des Fahrzeugs, also den Winkel zwischen dem Geschwindigkeitsvektor im Fahrzeugschwerpunkt und der Fahrzeuglängsachse, beobachten und begrenzen, wobei der Grenzwert von weiteren Einstellungen wie z.B. einem gewählten Fahrmodus abhängen kann. Die Steuerung des Fahrzeugs wird dabei derart gestaltet, dass aus dem durch den Fahrer eingestellten Lenkradwinkel und der aktuellen Fahrzeuggeschwindigkeit ggf. unter Berücksichtigung weiterer, beispielsweise den Fahrzustand beschreibender Größen lediglich ein Sollwert für die Giergeschwindigkeit des Fahrzeugs ermittelt wird.

Der bekannte Stand der Technik weist mehrere Nachteile auf. Zum einen ist keine technische Lösung bekannt, welche eine hinreichend sichere, spielfreie aber auch kostengünstige Realisierung des aktiven Stellteilprinzips zur Fahrzeugquerführung ermöglicht, die sicherstellt, dass der Fahrer den durch das Stellteil aktiv eingestellten Stellteilwinkel nicht durch eine sehr große Betätigungskraft verändern kann. Da die auf das Stellteil ausgeübte Betätigungskraft die Grundlage für die Sollwertbildung für die Fahrzeugquerbewegung darstellt, während der Stellteilwinkel der Rückmeldung des aktuellen Fahrzustandes, beispielsweise in Form der Krümmung der Bahnkurve des Fahrzeugschwerpunkts, dient, darf letzterer nicht durch den Fahrer unabsichtlich oder absichtlich beeinflusst werden. Ferner gilt es bei einer besonders vorteilhaften Ausstattung eines Kraftfahrzeugs mit zwei Stellteilen zu vermeiden, dass die Synchronität der Bewegung beider Stellteile in einem spürbaren Ausmaß beeinträchtigt wird.
Zum anderen ist dem Erfinder keine Steuerung eines straßengebundenen Kraftfahrzeugs bekannt, welche eine unabhängige Beeinflussung des Bahnkurvenradius einerseits und des Schwimmwinkels des Kraftfahrzeugs andererseits ermöglicht. Als Konsequenz daraus sind bekannte Steuerungen von Kraftfahrzeugen nur darauf ausgerichtet, den Schwimmwinkel geeignet zu begrenzen, nicht aber unabhängig vom Bahnkurvenradius gezielt zu beeinflussen. Insbesondere vor dem Hintergrund der zunehmenden Einführung von Lenksystemen an der Hinterachse, welche die Fahrzeugquerdynamik zusätzlich zu einem Lenksystem an der Vorderachse beeinflussen können, stellt die fehlende gezielte Beeinflussung des Fahrzeugschwimmwinkels einen gravierenden Nachteil dar, nicht nur bei höheren Fahrgeschwindigkeiten und Querbeschleunigungen, sondern beispielsweise auch beim Parken und Rangieren.

Der Erfindung liegt die Aufgabe zugrunde, ein Stellteil und eine Steuerung für ein Kraftfahrzeug zu entwickeln, um zumindest einen der vorstehend genannten Nachteile zu überwinden. Die Aufgabe der Erfindung wird von einer Steuerung mit den Merkmalen des Anspruchs 1 und einem Stellteil mit den Merkmalen des Anspruchs 11 gelöst. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Die Erfindung baut auf dem gattungsgemäßen Stand der Technik dadurch auf, dass das Stellteil nur in Fahrzeugquerrichtung beweglich ausgeführt ist und zur Steuerung des Kraftfahrzeugs zwei Stellteile genutzt werden. Die Stellteile sind dabei bevorzugt um die Längsachse des Fahrzeugs drehbar gelagert. Im Unterschied zum bekannten Stand der Technik wird die Betätigungskraft in Fahrzeugquerrichtung durch eine Stellteilquerkraft- bzw. -drehmomentsensorik redundant gemessen und dient als Grundlage zur Berechnung eines Sollwertes für die Fahrzeugquerbewegung, was vorteilhaft bzgl. des Phasenverhaltens zwischen Fahrzeugreaktion und Betätigungsgröße ist. Ein konventionell gesteuertes Kraftfahrzeug ändert die Richtung erst, wenn sich aufgrund des Momentes, welcher der Fahrer auf das Lenkrad ausübt, eine Änderung des Lenkradwinkels einstellt. Gemäß der vorliegenden Erfindung dienen die Kräfte, die auf die Stellteile in Fahrzeugquerrichtung ausgeübt werden, als Sollwertvorgabe, nachdem sie in einer besonders vorteilhaften Ausprägung dieser Erfindung gemittelt und mit einem geschwindigkeitsabhängigen Filter erster Ordnung gefiltert wurden. Durch die Geschwindigkeitsabhängigkeit der Filterung der gemittelten Betätigungskraft in Fahrzeugquerrichtung wird der Tatsache Rechnung getragen, dass der Phasenverzug zwischen Radlenkwinkel und Giergeschwindigkeit des Kraftfahrzeugs mit zunehmender Fahrgeschwindigkeit wächst. Folglich ist es vorteilhaft, die Filterkonstante mit zunehmender Fahrgeschwindigkeit beispielsweise stetig zu reduzieren.

In einer weiteren vorteilhaften Ausprägung der vorliegenden Erfindung wird der Zusammenhang zwischen gefilterter Kraft und Sollwert für die Lenkung geschwindigkeitsabhängig gestaltet, damit einerseits bei niedrigen Fahrgeschwindigkeiten die Stellteilkräfte zur Vorgabe großer Lenkwinkel nicht zu groß, andererseits bei hohen Fahrgeschwindigkeiten die Stellteilkräfte zur Vorgabe sehr kleiner Lenkwinkel nicht zu klein werden.

Um darüber hinaus den aktuell vorherrschenden Kraftschlussbeiwert zwischen Reifen und Fahrbahn spürbar zu machen, kann in einer weiteren vorteilhaften Ausgestaltung die notwendige Kraft zur Erzeugung eines bestimmten Lenkwinkels abhängig vom Reibwert gestaltet werden. Ist der Kraftschlussbeiwert niedrig, benötigt der Fahrer eine geringere Kraft, um denselben Lenkwinkel hervorzurufen, als bei hohem Kraftschlussbeiwert. Dieser kann beispielsweise auf Grundlage der Leistungsaufnahme des Radlenkwinkelstellers geschätzt werden.

Ferner wird der dem Fahrer als Rückmeldung dienende Stellteilwinkel durch eine Kombination eines elektrischen Stellteilaktuators und einem Stellteilgetriebe beeinflusst, so dass das Stellteil auch bei großen Betätigungskräften einen dem Fahrzustand entsprechenden Stellteilwinkel einstellen kann.
Der Sollwert für den als Rückmeldung dienenden Stellteilwinkel wird in einer besonders vorteilhaften Ausprägung dieser Erfindung aus mehreren Anteilen zusammengesetzt:
In einer vorteilhaften Ausgestaltung der Rückmeldung basiert ein Anteil des Sollwerts für den Stellteilwinkel bei niedrigen Fahrgeschwindigkeiten auf dem gemittelten Radlenkwinkel der Vorderräder. Dadurch kann der Fahrer beispielsweise spüren, wenn die Vorderräder aufgrund eines Bordsteines nicht wie gewünscht eingeschlagen werden können.

Nachdem die Fahrzeugquerdynamik mit zunehmender Fahrgeschwindigkeit zusätzlich durch das Eigenlenkverhalten des Kraftfahrzeugs beeinflusst wird, hat es sich in Fahrversuchen als besonders vorteilhaft herausgestellt, alternativ zu einer Rückmeldung des mittleren Radlenkwinkels die aktuelle Krümmung der Bahnkurve des Fahrzeugschwerpunktes zu wählen. Nachdem die reale Krümmung der gefahrenen Bahnkurve nicht immer trivial zu bestimmen ist, kann beispielsweise mit Hilfe des Einspurmodells auf Grundlage des mittleren Radlenkwinkel, der Fahrgeschwindigkeit und des Eigenlenkgradienten des Kraftfahrzeugs die Krümmung der Bahnkurve des Fahrzeugschwerpunktes vereinfacht berechnet werden.

Nachdem diese überschlägige Berechnung im fahrdynamischen Grenzbereich, also beim Auftreten größerer Schwimmwinkel, nicht mehr zutreffend ist, wird in einer weiteren, besonders vorteilhaften Ausgestaltung der Berechnung des Sollwerts für den Stellteilwinkel zusätzlich ein weiterer Anteil berücksichtigt, welcher das Übersteuern in Form eines zusätzlichen Stellteilwinkels spürbar macht. Dazu kann beispielsweise die Abweichung zwischen gemessener Giergeschwindigkeit und der mit Hilfe des Einspurmodells berechneten Giergeschwindigkeit bzw. die Änderung dieser Differenz geeignet skaliert und zum Stellteilsollwinkel addiert werden.

In einer besonders vorteilhaften Ausführung wird die Betätigungskraft des Fahrers in Fahrzeugquerrichtung mindestens dreifach gemessen, um einen fehlerhaften Messwertgeber identifizieren zu können. Dies wird beispielsweise durch einen paarweisen Vergleich von jeweils zwei der mindestens drei Messwerten möglich, da bei einem defekten Messwertgeber nur ein Vergleich von zwei intakten Sensoren eine Abweichung ergibt, die kleiner als eine definierte Toleranzschwelle ist. Um Mehrfachfehler mit gemeinsamer Ursache auszuschließen, erscheint es ferner vorteilhaft, unterschiedliche Messprinzipien zu implementieren, zum Beispiel auf Basis von Dehnmessstreifen, Piezosensoren und Hall-Sensoren.

In einer weiteren vorteilhaften Ausführung umfasst das Stellteilgetriebe mindestens ein sog. Wellgetriebe, welches aus der Robotik bekannt ist und sich durch große Übersetzungen von beispielsweise 1:100 bei praktischer Spielfreiheit auszeichnet. Damit kann ein sehr kleiner Stellteilaktuator mit geringer elektrischer Leistungsaufnahme ausgewählt werden, der zudem leicht ist und wenig Bauraum beansprucht. Alternativ können Schneckenradgetriebe eingesetzt werden, wie sie beispielsweise aus elektrischen Hilfskraftlenkungen bekannt sind.

Um entweder den Stellteilaktuator noch weiter in seiner Leistung zu reduzieren und/oder die tolerierbare Betätigungskraft zu erhöhen, wird das Stellteil in einer weiteren vorteilhaften Ausführung um eine Stellteilbremse ergänzt, welche entweder den Stellteilaktuator oder den Stellteilgriff abbremst. Die Stellteilbremse wird beispielsweise dann aktiviert, wenn ein geeigneter Algorithmus erkennt, dass die Betätigungskraft des Fahrers derart stark anwächst, dass diese die seitens des Stellteilaktuators in Kombination mit dem Stellteilgetriebe erzeugbare Stellteilkraft zu überschreiten droht. In einer weiteren vorteilhaften Ausprägung könnte diese Stellteilbremse als stromlos geschlossen ausgebildet werden, so dass die Stellteilposition bei abgestelltem Fahrzeug definiert ist.

In einer weiteren besonders vorteilhaften Ausprägung wird nicht nur die Betätigungskraft in Fahrzeugquerrichtung, sondern zusätzlich die Betätigungskraft in Fahrzeuglängsrichtung redundant gemessen. Diese Längskraft kann als Grundlage zur Sollwertbildung für weitere Funktionen genutzt werden. Eine hinreichende Redundanz der Messung ermöglicht es hierbei, auch sicherheitsrelevante Funktionen zu adressieren, wie z.B. eine Fahrzeugverzögerung durch Regelung des Rekuperationsmoments elektrischer Fahrantriebe. Damit kann der Fahrer bewusst eine Fahrzeugverzögerung einleiten, in deren Zuge kinetische Energie durch den generatorischen Betrieb des elektrischen Fahrzeugantriebs in Form von elektrischem Strom zurückgewonnen wird. Alternativ könnte beispielsweise eine Notbremsfunktion für automatisiert fahrende Fahrzeuge implementiert werden. Dabei erscheint besonders vorteilhaft, dass die Stellteile für den Fahrer immer leicht erreichbar und sichtbar sind, während das Bremspedal bei leicht geänderter Körperhaltung während der automatisierten Fahrt nicht sicher auffindbar bzw. betätigbar erscheint. Besonders bevorzugt kann über die Längskraft sowohl die Regelung des Rekuperationsmoments als auch die Notbremsfunktion gesteuert werden. Hierfür kann z.B. ein Schwellenwert für die Längskraft vorgesehen werden, bei dessen Überschreiten die Notbremsfunktion aktiviert wird und die Reibbremse zugeschaltet wird. Unterhalb des Schwellenwertes erfolgt eine Verzögerung nur über die Regelung des Rekuperationsmoments. Die Auslenkbarkeit der Stellteile in Längsrichtung ist vorzugsweise wesentlich geringer als die Auslenkbarkeit in Fahrzeugquerrichtung. Die Auslenkbarkeit in Längsrichtung beträgt bevorzugt weniger als 10 % der Auslenkbarkeit in Fahrzeugquerrichtung. Vorzugsweise ist gar keine spürbare Auslenkbarkeit der Stellteile in Längsrichtung vorgesehen. Die Betätigungskräfte in Längsrichtung bewirken dabei nur eine elastische Biegung der jeweiligen Stellteile in Längsrichtung.

Die Erfindung umfasst ferner eine Steuerung für ein Kraftfahrzeug mit mindestens zwei lenkbaren Vorderrädern, welche eine unabhängige Beeinflussung des gefahrenen Kurvenradius sowie des Schwimmwinkel des Fahrzeugs zulässt, indem die auf zwei erfindungsgemäße Stellteile in Fahrzeugquerrichtung ausgeübten Betätigungskräfte gemittelt und zur Beeinflussung des Radius der Bahnkurve des Kraftfahrzeugs genutzt werden, während die auf die erfindungsgemäßen Stellteile in Fahrzeuglängsrichtung ausgeübten Betätigungskräfte zur Berechnung einer angestrebten Schwimmwinkeländerung des Kraftfahrzeugs genutzt werden. Dies ermöglicht es dem Fahrer beispielsweise, die Änderung des Gierwinkels des Fahrzeugs bei einem Fahrstreifenwechsel gezielt zu reduzieren, indem über die Differenz der auf die Stellteile ausgeübten Längskräfte ein Schwimmwinkel kommandiert wird, welcher dem auf Grundlage der Summe der Stellteilquerkräfte berechneten Bahnkurvenradius entgegengesetzt ist, oder aber beispielsweise eine bewusste Erhöhung des Schwimmwinkels bei zügiger Kurvenfahrt. Bei langsamer Kurvenfahrt wie beispielsweise dem Einfahren auf einen Parkplatz kann der Fahrer den zusätzlichen Freiheitsgrad bzgl. der Beeinflussung des Fahrzustands auch dazu nutzen, den Fahrbahnbreitenbedarf des Fahrzeugs zu reduzieren und dadurch eine potentielle Kollision der kurveninneren Fahrzeugseite mit einem Hindernis zu vermeiden. Ferner wäre vorstellbar, beim parallelen Einparken eine Differenz der Längskräfte auf das rechte und linke Stellteil dazu zu nutzen, um eine Hinterradlenkung direkt oder indirekt zu beeinflussen, sodass der Fahrer das Fahrzeug bei hinreichend großen verfügbaren Lenkwinkeln an der Hinterachse bei Vorwärtsfahrt parallel einparken kann.

In einer besonders vorteilhaften Ausprägung der erfindungsgemäßen Steuerung hängt die angestrebte Schwimmwinkeländerung des Kraftfahrzeugs von dem Betrag und dem Vorzeichen der auf die beiden Stellteile in Fahrzeuglängsrichtung ausgeübten Kräfte ab, so dass der Fahrer den Schwimmwinkel des Fahrzeugs in beide Richtungen feinfühlig dosierbar vorgeben kann. Dabei ist es auch denkbar, nur dann einen Sollwert für den Schwimmwinkel des Kraftfahrzeugs zu berechnen, wenn der Fahrer beispielsweise auf beide Stellteile eine umgekehrt orientierte Kraft aufprägt oder zumindest beide Stellteile betätigt.

In einer weiteren vorteilhaften Ausprägung der erfindungsgemäßen Steuerung wird die angestrebte Schwimmwinkeländerung mindestens von einer geeigneten Kombination von Lenkwinkeländerungen der gelenkten Räder oder durch eine Kombination von Lenkwinkeländerungen an einzelnen Rädern sowie von Antriebs- und oder Bremsmomenten an einem oder mehreren Rädern eingestellt. Sofern sowohl die Räder der Vorderachse, als auch die Räder der Hinterachse lenkbar ausgeführt sind, kann der Schwimmwinkel in jeder beliebigen Fahrsituation unabhängig vom Bahnkurvenradius beeinflusst werden, beispielsweise auch bei Geradeausfahrt. Auf eine Hinterradlenkung kann beispielsweise verzichtet werden, sofern das Fahrzeug über selektiv betätigbare Radbremsen verfügt, wobei in diesem Fall die vom Bahnkurvenradius unabhängige Steuerung des Schwimmwinkels insbesondere im fahrdynamischen Grenzbereich möglich ist.

Weitere Vorteile, Ziele und Eigenschaften vorliegender Erfindung werden anhand anliegender Zeichnungen und nachfolgender Beschreibung erläutert, in welchen beispielhaft ein erfindungsgemäßes Lenksystem dargestellt und beschrieben wird.

In den Zeichnungen zeigen:

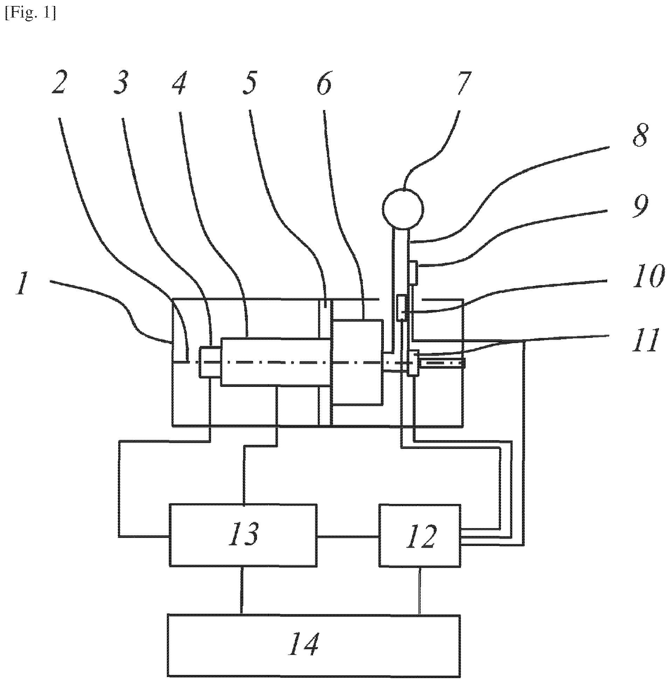

- Figur 1: schematisch eine Seitenansicht eines Ausführungsbeispiels des Stellteils einschließlich einer elektronischen Einheit zur Berechnung querdynamischer Sollwerte, einer weiteren Einheit zur Synthese eines Sollwertes für den Stellteilwinkel sowie zur Ansteuerung des Stellteilaktuators und der Stellteilbremse, sowie einem Fahrzeugrechner, der mit beiden Einheiten kommuniziert.

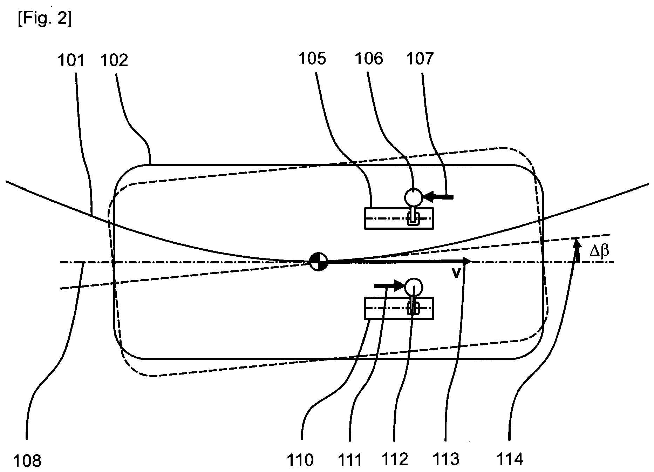

- Figur 2: schematisch eine beispielhafte Fahrsituation, in welcher ein mit zwei erfindungsgemäßen Stellteilen ausgestattetes Kraftfahrzeug eine Linkskurve durchfährt, wobei das Fahrzeug zusätzlich in einer angestrebten Fahrzeuglage mit einer durchbrochenen Linie eingezeichnet ist.

Das in der Figur 1 gezeigte, exemplarische Stellteil besitzt ein Stellteilgehäuse (1), in welchem eine Stellteilbremse (3), ein Stellteilaktuator (4) sowie ein Stellteilgetriebe (6) angeordnet ist, wobei der Stellteilaktuator und das Stellteilgetriebe durch einen mit (5) gekennzeichneten Aktuator- und Getriebehalter schematisch mit dem Stellteilgehäuse verbunden sind. Drehzahl und Drehmoment des Stellteilaktuators (4) werden durch das Stellteilgetriebe (6) gewandelt, woraus eine Schwenkbewegung des Stellteilarms (8) um die Stellteildrehachse (2) resultiert. Die auf den Stellteilgriff (7) ausgeübten Kräfte werden durch die abstrahiert dargestellte Stellteilquerkraftsensorik (10) in Stellteilquerrichtung sowie durch die Stellteillängskraftsensorik (9) in Stellteillängsrichtung erfasst, wobei beide Sensoriken redundante und idealerweise diversitär ausgeführte Sensoren enthalten. Der Stellteilwinkelsensor (11) dient der Messung des Stellteilwinkels, welcher unter anderem zur Regelung desselben genutzt werden kann. Die mit (12) gekennzeichnete Einheit dient der Berechnung geeigneter Sollwerte mindestens für die Fahrzeugquerbewegung auf Grundlage der durch die Stellteillängskraftsensorik (9) und die Stellteilquerkraftsensorik (10) ermittelten Kräfte, wobei in einer erfindungsgemäßen, besonders vorteilhaften Ausführung zwischen einem Sollwert für den Bahnkurvenradius und einem Sollwert für den Schwimmwinkel des Fahrzeugs unterschieden wird. In die Berechnung können weitere Fahrzustandsgrößen einbezogen werden, welche durch den beispielhaft dargestellten Fahrzeugrechner (14) bereitgestellt werden können. Die in Figur 1 exemplarisch als separate Einheit (13) dargestellte Rückmeldungssynthese umfasst mindestens einen Algorithmus, der zum Beispiel auf Grundlage von durch den Fahrzeugrechner (14) übermittelten Zustandsgrößen und/oder Werten der Sollwertberechnung (12) einen Sollwert für den Stellteilwinkel ermittelt. Der Fahrzeugrechner (14) ist in dieser beispielhaften Ausführung dafür zuständig, die von der Sollwertberechnung (12) bereitgestellten Sollwerte für den Bahnkurvenradius sowie für den Schwimmwinkel durch eine geeignete Auswahl und Ansteuerung der Lenkungsaktuatoren sowie ggf. der Antriebs- und/oder Bremsmomente individueller Räder so weit wie möglich umzusetzen.

In einer alternativen, vorteilhaften Ausführung sind die Algorithmen zur Sollwertberechnung und Rückmeldungssynthese nicht auf separate Einheiten oder Steuergeräte verteilt, sondern geeignet in andere Steuergeräte integriert und zudem mehrfach redundant ausgeführt, um ein hinreichendes Maß an funktionaler Sicherheit zu erzielen.

Figur 2 zeigt schematisch eine beispielhafte Fahrsituation, in welcher sich ein Kraftfahrzeug entlang einer Bahnkurve (101) mit einer zur Bahnkurve tangentialen Fahrgeschwindigkeit (113) bewegt. Die aktuelle Fahrzeuglage (102) des mit zwei erfindungsgemäßen Stellteilen (105, 110) ausgestatteten Kraftfahrzeugs ist in Figur 2 durch eine ununterbrochene Linie gekennzeichnet. Die aktuelle Fahrzeuglängsachse (108) ist deckungsgleich mit dem aktuellen Fahrzeuggeschwindigkeitsvektor (113) des Kraftfahrzeugs, so dass der Schwimmwinkel im beispielhaft dargestellten aktuellen Fahrzustand Null beträgt. Übt der Fahrer auf den Griff des linken Stellteils (106) eine der Fahrzeuggeschwindigkeit entgegengesetzte Längskraft (107) aus, während er dem mit (112) bezeichneten rechten Stellteilgriff eine Längskraft (111) in Richtung der Fahrzeuggeschwindigkeit aufprägt, resultiert in dem dargestellten Beispiel daraus die mit (114) gekennzeichnete angestrebte Schwimmwinkeländerung Δβ.

In einer besonders vorteilhaften Ausführung ist es nicht ausreichend, nur auf eines der beiden Stellteile (105, 110) eine Kraft in Längsrichtung auszuüben, um eine Schwimmwinkeländerung zu kommandieren, da dies zu einer unbeabsichtigten Veränderung des Schwimmwinkels führen könnte. Ferner ist es vorteilhaft, zusätzlich zu den Längskräften auf den rechten und linken Stellteilgriff (107, 111) weitere Fahrzustandsgrößen wie beispielsweise die Fahrzeuggeschwindigkeit in die Berechnung der angestrebten Schwimmwinkeländerung einzubeziehen.

## Patentansprüche

1. Steuerung für ein Kraftfahrzeug mit mindestens zwei lenkbaren Vorderrädern und zwei Stellteilen (105, 110), wobei das jeweilige Stellteil in Fahrzeugquerrichtung beweglich ausgeführt ist und eine Betätigungskraft in Fahrzeugquerrichtung durch eine Stellteilquerkraftsensorik und/oder -drehmomentsensorik (10) messbar und als Grundlage zur Berechnung eines Sollwertes für die Fahrzeugquerbewegung nutzbar ist, während ein Stellteilwinkel des Stellteils mindestens durch einen elektromotorischen Stellteilaktuator (4) beeinflussbar ist, dessen Drehzahl und Drehmoment durch ein Stellteilgetriebe (6) wandelbar sind, **dadurch gekennzeichnet, dass** die auf die Stellteile (105, 110) in Fahrzeugquerrichtung ausgeübten Betätigungskräfte gemittelt und mit einem geschwindigkeitsabhängigen Filter zumindest erster Ordnung gefiltert werden, wobei eine so gemittelte und gefilterte Betätigungskraft als Sollwertvorgabe für die Fahrzeugquerbewegung und damit zur Beeinflussung des Radius der Bahnkurve (101) des Kraftfahrzeugs genutzt werden.

2. Steuerung nach dem vorstehenden Anspruch, **dadurch gekennzeichnet, dass** zwischen der gefilterten, gemittelten Betätigungskraft und der Sollwertvorgabe für die Lenkung ein derart geschwindigkeitsabhängiger Zusammenhang vorgesehen ist, dass bei niedrigen Fahrgeschwindigkeiten die Stellteilkräfte zur Vorgabe großer Lenkwinkel nach oben beschränkt werden und bei hohen Fahrgeschwindigkeiten die Stellteilkräfte zur Vorgabe kleiner Lenkwinkel erhöht werden.

3. Steuerung nach einem der Ansprüche 1 oder 2, **dadurch gekennzeichnet, dass** eine zur Erzeugung eines bestimmten Lenkwinkels notwendige Betätigungskraft als eine Funktion eines über eine Sensorik ermittelten Kraftschlussbeiwerts zwischen Reifen und Fahrbahn ausgeführt ist, wobei bevorzugt für einen definierten Lenkwinkel bei einem geringen Kraftschlussbeiwert eine geringere Betätigungskraft als bei einem hohen Kraftschlussbeiwert erforderlich ist.

4. Steuerung nach einem der Ansprüche 1 bis 3, **dadurch gekennzeichnet, dass** die Berechnung eines Sollwertes für den Stellteilwinkel mehrere Anteile umfasst, wobei bevorzugt zumindest ein Anteil ein gemittelter Radlenkwinkel des ersten und zweiten Vorderrades ist.

5. Steuerung nach Anspruch 4, **dadurch gekennzeichnet, dass** ein Anteil die aktuelle oder erwartete Krümmung einer Bahnkurve des Fahrzeugschwerpunktes ist.

6. Steuerung nach einem der Ansprüche 4 oder 5, **dadurch gekennzeichnet, dass** ein weiterer Anteil vorgesehen ist, welcher ein Übersteuern des Fahrzeugs in Form eines zusätzlichen Anteils des Stellwinkels an dem ersten und/oder zweiten Stellteil spürbar macht, wobei dieser Anteil bevorzugt mit einer Gewichtung durch eine Differenz zwischen gemessener Giergeschwindigkeit und über ein Einspurmodell berechneter Giergeschwindigkeit und/oder einer Änderung der Differenz gebildet ist.

7. Steuerung nach einem der vorstehenden Ansprüche, **dadurch gekennzeichnet, dass** die auf die Stellteile in Fahrzeuglängsrichtung ausgeübten Betätigungskräfte (107, 111) zur Berechnung einer angestrebten Schwimmwinkeländerung (114) des Kraftfahrzeugs dienen, wobei die angestrebte Schwimmwinkeländerung (114) des Kraftfahrzeugs insbesondere von dem Betrag und dem Vorzeichen der auf die beiden Stellteile in Fahrzeuglängsrichtung ausgeübten Kräfte (107 und 111) abhängt.

8. Steuerung nach Anspruch 7, **dadurch gekennzeichnet, dass** die angestrebte Schwimmwinkeländerung (114) mindestens durch eine geeignete Kombination von Lenkwinkeländerungen der gelenkten Räder, oder durch eine Kombination von Lenkwinkeländerungen an einzelnen Rädern sowie von Antriebs- und oder Bremsmomenten an einem oder mehreren Rädern eingestellt wird.

9. Steuerung für ein Kraftfahrzeug mit einem regelbaren Rekuperationsmoment nach einem der Ansprüche 7 oder 8, **dadurch gekennzeichnet, dass** über mindestens eine der Betätigungskräfte auf die Stellteile in Fahrzeuglängsrichtung ein Rekuperationsmoment vorgegeben und eingeregelt wird.

10. Steuerung für ein Kraftfahrzeug mit einer Reibbremse nach einem der Ansprüche 7 bis 9, **dadurch gekennzeichnet, dass** über mindestens eine der Betätigungskräfte auf die Stellteile in Fahrzeuglängsrichtung die Reibbremse des Fahrzeugs angesteuert wird, bevorzugt, wenn mindestens eine der Betätigungskräfte einen Schwellwert überschreitet.

11. Stellteil zur Verwendung mit einer Steuerung eines Kraftfahrzeugs mit mindestens zwei lenkbaren Rädern nach einem der vorstehenden Ansprüche, **dadurch gekennzeichnet, dass** das Stellteil in Fahrzeugquerrichtung beweglich ausgeführt ist und eine Betätigungskraft in Fahrzeugquerrichtung durch eine Stellteilquerkraftsensorik und/oder -drehmomentsensorik (10) messbar und als Grundlage zur Berechnung eines Sollwertes für die Fahrzeugquerbewegung nutzbar ist, während ein Stellteilwinkel des Stellteils mindestens durch einen elektromotorischen Stellteilaktuator (4) beeinflussbar ist, dessen Drehzahl und Drehmoment durch ein Stellteilgetriebe (6) wandelbar sind, wobei zusätzlich zur Betätigungskraft in Fahrzeugquerrichtung auch eine Betätigungskraft in Fahrzeuglängsrichtung durch eine Stellteillängskraftsensorik (9), insbesondere redundant messbar ist.

12. Stellteil nach Anspruch 11, **dadurch gekennzeichnet, dass** die Betätigungskraft in Fahrzeugquerrichtung redundant, insbesondere mindestens dreifach, messbar ist.

13. Stellteil nach einem der Ansprüche 11 oder 12, **dadurch gekennzeichnet, dass** das Stellteilgetriebe (6) ein Wellgetriebe oder ein Schneckenradgetriebe umfasst.

14. Stellteil nach einem der Ansprüche 11 bis 13 mit einer Stellteilbremse, **dadurch gekennzeichnet, dass** der Stellteilwinkel durch die Stellteilbremse (6) derart beeinflussbar ist, dass eine Veränderung des Stellteilwinkels durch eine sehr hohe Kraft des Fahrers auf den Stellteilgriff (7) gegen ein durch das Stellteilgetriebe (6) gewandeltes Moment des Stellteilaktuators (4) verhindert werden kann.

15. Kraftfahrzeug mit einer Steuerung nach einem der Ansprüche 1 bis 10 und einem Stellteil nach einem der Ansprüche 11 bis 14.

## Claims

1. A control for a motor vehicle having at least two steerable front wheels and two control elements (105, 110), wherein the respective control element is movable in a transverse direction of the vehicle and an actuating force is measurable in the transverse direction of the vehicle by a control element force sensor system and/or a control element torque sensor system (10), and is a basis for calculating a target value for the transverse movement of the vehicle, whilst a control element angle of the control element can be influenced at least by an electromotive control element actuator (4), whose rotational speed and torque are convertible by a control element gearbox (6), **characterized in that** the actuating forces exerted on the control elements (105, 110) in the transverse direction of the vehicle are averaged and filtered using a speed-dependent filter at least of first order, wherein the averaged and filtered actuating force is provided as a target value specification for the transverse movement of the vehicle and thus for influencing the radius of the trajectory (101) of the vehicle.

2. The control according to the preceding claim, **characterized in that** a speed-dependent relationship is specified between the filtered, averaged actuating force and the target value specification for the steering in such a way that, in the case of low driving speeds, the control element forces for specifying large steering angles are limited upwards and, in the case of high driving speeds, the control element forces for specifying small steering angles are increased.

3. The control according to claims 1 or 2, **characterized in that** an actuating force required for generating a specific steering angle is determined as a function of an adhesion coefficient between tire and roadway determined by a sensor system, wherein preferably a smaller actuating force is required for a defined steering angle for a small adhesion coefficient than for a high adhesion coefficient.

4. The control according to any one of claims 1 to 3, **characterized in that** the calculation of a target value for the control element angle comprises a plurality of portions, wherein preferably at least one portion is an averaged wheel steering angle of the first and second front wheels.

5. The control according to claim 4, **characterized in that** one portion is a current or expected curvature of a trajectory of the center of gravity of the vehicle.

6. The control according to claims 4 or 5, **characterized in that** a further portion is provided, which makes oversteering of the vehicle perceptible in the form of an additional portion of the actuating angle at one or both of the first and the second control element, wherein this portion is preferably formed with a weighting by a difference between measured yaw rate and a yaw rate calculated by one or both of a single-track model and a change of the difference.

7. The control according to any one of the preceding claims, **characterized in that** the actuating forces (107, 111) exerted on the control elements in the longitudinal direction of the vehicle are provided for calculating a target change in the float angle (114) of the motor vehicle, wherein preferably the target change in the float angle (114) of the motor vehicle depends on the amount and the sign of the forces (107, 111) exerted on the two control elements in the longitudinal direction of the vehicle.

8. The control according to claim 7, **characterized in that** the target change in the float angle (114) is set at least by a suitable combination of steering angle changes of the steered wheels or by a combination of steering angle changes on individual wheels as well as by driving torques and/or braking torques on one or more wheels.

9. The control for a motor vehicle with a controllable recuperation torque according to claims 7 or 8, **characterized in that** a recuperation torque is specified and controlled by at least one of the actuating forces on the control elements in the longitudinal direction of the vehicle.

10. The control for a motor vehicle with a friction brake according to any one of claims 7 to 9, **characterized in that** the friction brake of the vehicle is controlled by at least one of the actuating forces on the control elements in the longitudinal direction of the vehicle, preferably, if at least one of the actuating forces exceeds a threshold value.

11. A control element for use with a control for a motor vehicle having at least two steerable wheels according to any one of the preceding claims, **characterized in that** the control element is movable in the transverse direction of the vehicle and an actuating force is measurable in the transverse direction of the vehicle by a control element force sensor system and/or a control element torque sensor system (10), and is a basis for calculating a target value for the transverse movement of the vehicle, whilst a control element angle of the control element can be influenced at least by an electromotive control element actuator (4), whose rotational speed and torque are convertible by a control element gearbox (6), wherein in addition to the actuating force in the transverse direction of the vehicle, an actuating force in the longitudinal direction of the vehicle is measurable by a control element longitudinal force sensor system, preferably redundantly.

12. The control element according to claim 11, **characterized in that** the actuating force in the transverse direction of the vehicle is redundantly measurable, in particular at least three times.

13. The control element according to claims 11 or 12, **characterized in that** the control element gearbox (6) comprises a harmonic drive or a worm gearbox.

14. The control element according to any one of claims 11 to 13 with a control element brake (6), **characterized in that** the control element angle is governable by the control element brake (6) such that a change of the control element angle by a high force of the driver on the control element handle (7) against a torque of the control element actuator (4) converted by the control element gearbox (6) can be prevented.

15. A motor vehicle with a control according to any one of claims 1 to 10 and a control element according to any one of claims 11 to 14.

## Revendications

1. Commande d'un véhicule automobile avec au moins deux roues avant directrices et deux organes de commande (105, 110), où chaque organe de commande est mobile dans le sens transversal du véhicule et une force d'actionnement dans le sens transversal du véhicule est mesurable par des capteurs de force transversale des organes de commande et / ou des capteurs de couple des organes de commande (10) et utilisable comme base de calcul d'une valeur de consigne du mouvement transversal du véhicule, alors qu'un angle de l'organe de commande est influençable au moins par un actionneur d'organe de commande électromoteur (4), dont la vitesse de rotation et le couple sont convertibles par une transmission d'organe de commande (6), **caractérisée en ce que** les forces d'actionnement exercées sur les organes de commande (105, 110) dans le sens transversal du véhicule sont moyennées et filtrées par un filtre dépendant de la vitesse d'au moins de premier ordre, où une force d'actionnement ainsi moyennée et filtrée est utilisée en tant que valeur de consigne pour le mouvement transversal du véhicule et ainsi pour influencer le rayon de la trajectoire (101) du véhicule automobile.

2. Commande selon la revendication précédente, **caractérisée en ce qu'**entre la force d'actionnement filtrée et moyennée et la valeur de consigne de la direction est prévu un rapport dépendant de la vitesse de telle sorte que les forces des organes de commande soient limitées vers le haut pour prescrire de grands angles de direction à basses vitesses de déplacement et que les forces des organes de commande soient augmentées pour prescrire de petits angles de direction à des vitesses de déplacement élevées.

3. Commande selon l'une des revendications 1 ou 2, **caractérisée en ce qu'**une force d'actionnement nécessaire pour créer un angle de direction déterminé est exécutée comme une fonction d'un coefficient d'adhérence entre les pneus et la chaussée, fonction déterminée par des capteurs où, de préférence, pour un angle de direction défini, une force d'actionnement moindre est nécessaire avec un petit coefficient d'adhérence qu'avec un coefficient d'adhérence élevé.

4. Commande selon l'une des revendications 1 à 3, **caractérisée en ce que** le calcul d'une valeur consigne de l'angle d'organes de commande comprend plusieurs parties, où, de préférence, au moins une partie est un angle de direction de roue moyenné de la première et de la deuxième roue avant.

5. Commande selon la revendication 4, **caractérisée en ce qu'**une partie est la courbure actuelle ou attendue d'une trajectoire du centre de gravité du véhicule.

6. Commande selon l'une des revendications 4 ou 5, **caractérisée en ce qu'**une autre partie est prévue qui rend perceptible un survirage du véhicule sous forme d'une partie supplémentaire de l'angle de direction sur le premier et / ou le deuxième organe de commande, où cette partie est formée, de préférence, avec une pondération par une différence entre la vitesse de giration mesurée et la vitesse de giration calculée au moyen d'un modèle linéaire et / ou une modification de la différence.

7. Commande selon l'une des revendications précédentes, **caractérisée en ce que** les forces d'actionnement (107, 111) exercées sur les organes de commande dans le sens longitudinal du véhicule servent pour le calcul d'une modification de l'angle de dérapage recherchée (114) du véhicule automobile, où la modification de l'angle de dérapage recherchée (114) du véhicule automobile dépend en particulier de la valeur et du signe des forces (107 et 111) exercées sur les deux organes de commande dans le sens longitudinal du véhicule.

8. Commande selon la revendication 7, **caractérisée en ce que** la modification de l'angle de dérapage recherchée (114) est réglée au moins par une combinaison appropriée de modifications d'angle de direction des roues directrices ou par une combinaison de modifications d'angle de direction de chaque roue et de couples d'entraînement et / ou de freinage d'une ou de plusieurs roues.

9. Commande d'un véhicule automobile avec un couple de récupération réglable selon l'une des revendications 7 ou 8, **caractérisée en ce qu'**un couple de récupération est prédéterminé et réglé sur au moins une des forces d'actionnement exercées sur les organes de commande dans le sens longitudinal du véhicule.

10. Commande d'un véhicule automobile avec un frein à friction selon l'une des revendications 7 à 9, **caractérisée en ce que** le frein à friction du véhicule est piloté par au moins une des forces d'actionnement exercées sur les organes de commande dans le sens longitudinal du véhicule, de préférence lorsqu'au moins une des forces d'actionnement dépasse une valeur de seuil.

11. Organe de commande pour être utilisé avec une commande d'un véhicule automobile avec au moins deux roues directrices selon l'une des revendications précédentes, **caractérisé en ce que** l'organe de commande est mobile dans le sens transversal du véhicule et qu'une force d'actionnement dans le sens transversal du véhicule est mesurable par des capteurs de force transversale des organes de commande et / ou des capteurs de couple des organes de commande (10) et utilisable comme base de calcul d'une valeur de consigne du mouvement transversal du véhicule, alors qu'un angle de l'organe de commande est influençable au moins par un actionneur d'organe de commande électromoteur (4), dont la vitesse de rotation et le couple sont convertibles par une transmission d'organe de commande (6), où, en complément de la force d'actionnement dans le sens transversal du véhicule, une force d'actionnement dans le sens longitudinal du véhicule est également mesurable par des capteurs de force longitudinale des organes de commande (9), en particulier de façon redondante.

12. Organe de commande selon la revendication 11, **caractérisé en ce que** la force d'actionnement dans le sens transversal du véhicule est mesurable de façon redondante, en particulier au moins trois fois.

13. Organe de commande selon l'une des revendications 11 ou 12, **caractérisé en ce que** la transmission d'organe de commande (6) comprend un engrenage planétaire ou une vis sans fin.

14. Organe de commande selon l'une des revendications 11 à 13 avec un frein d'organe de commande, **caractérisé en ce que** l'angle d'organe de commande est influençable par le frein d'organe de commande (6) de telle sorte qu'une modification de l'angle d'organe de commande peut être empêchée par une force très élevée exercée par le conducteur sur la poignée d'organe de commande (7) contre un couple converti par la transmission d'organe de commande (6) de l'actionneur de l'organe de commande (4).

15. Véhicule automobile avec une commande selon l'une des revendications 1 à 10 et un organe de commande selon l'une des revendications 11 à 14.
